# EUROPEAN PATENT APPLICATION

(11) **EP 1 710 128 A1**
(43) Date of publication of application: **11.10.2006**
(21) Application number: 06112386.5
(22) Date of filing: 07.04.2006
(51) Int. Cl.: B60R 16/02, H02J 7/14, H02J 7/00

(54) **Battery charging device**

(30) Priority: 08.04.2005 SE 0500797
(71) Applicant: Creator Teknisk Utveckling, 176 74 Vikmanshyttan (SE)
(72) Inventor: Maleus, Börje, 176 74 Järfälla (SE)
(74) Representative: Holmberg, Nils Anders Patrik

(57) **Abstract**

A battery charging device (200) comprising a first DC/DC converter (220;320;420) being adapted to increase a voltage of a battery (218;318;418); a first connection means (222;322;422) coupled in parallel with the first DC/DC converter; wherein current delivered from the generator (212;312;412) is supplied to the battery (218;318;418) via the first connection means (222;322;422) at a current level above a current level threshold and wherein current delivered from the generator (212;312;412) is supplied to the battery (218;318;418) via the DC/DC converter (220;320;420) at a current level below the current level threshold; and a second DC/DC converter (224;324;424) adapted to increase a voltage of a second battery (219;319;419), wherein the current delivered from the generator (212;312;412) is supplied to the second battery (219;319;419) via the second DC/DC converter (224;324;424).

## Description

### Technical field

The present invention relates to a battery charging device for isolating batteries being charged from a single source (e.g. an alternator) that can be manufactured at a low cost, and that can be used in wide variety of applications, such as, cars, buses, boats, or caravans.

### Background of the invention

Generators of, for example, boats, vehicles, such as cars or heavy trucks, or caravans do not charge the battery to full capacity due to the fact that they normally charge at a too low voltage. A voltage of about 13,5-14 V of the generator is not sufficient for an efficient charging of the battery. In addition, there is often a voltage drop over the connection wires, in particular, in boats and caravans where long connection wires are used. Traditionally, these problems have been dealt with by using a generator capable of charging with a constant current up to maximum voltage, followed by a constant voltage until the battery is fully charged. Unfortunately such generators are very expensive and have a complex construction. Another solution is to use a so called booster, which is a DC/DC converter capable of raising the voltage to the appropriate charging level. This booster is not capable of handling the generator current over the complete charging spectra, in particular, generator currents over 40-50 A.

In U. S. 6,188,199, a battery charging optimizing system is disclosed including a first circuit for supplying charging current to the battery from a DC bus or power from the battery to the bus depending on the relative voltages of the bus and the battery and a second circuit for providing a voltage higher than the voltage of the bus to the battery-A controller sensing the voltage of the battery and the current flowing to the battery is adapted to actuate the first and second circuits as a function of the sensed voltage and current. Hence, this solution is directed to the optimizing of the charging of one battery.

In boats or caravans a pair of batteries or a bank of batteries is often used. Often, one battery is reserved for engine starting and the other, possible a bank of batteries connected in parallel, serves the various electrical appliances fitted to the boat or the caravan. Because there is no routine drain on the cranking battery, it should remain fully charged and so offer the security of being ready for use at any time. Unfortunately, multi-battery installations bring their own charging problems. Obviously, both batteries must be charged from the same source (the alternator), and if they remain connected once the charging current has stopped, any imbalance in charge between the two will tend to level out, with the least charged battery pulling down the other. If one of the batteries were to become defective, it could deplete the healthier one to the point where both could be useless. In order to solve this problem, the batteries must be separated or isolated from each other. This can be obtained in number of ways. A first way is to use a manual switch, which is the simplest and cheapest solution. However, this arrangement is inherently prone to forgetfulness since the user, for example, has to remember to switch to the engine battery before starting the engine and switch back to the service battery after the engine has been running for while. Another solution is to use separating diodes, i.e. two diodes having a common input terminal and separate output terminal connected to respective battery. However, this solution is impaired with the disadvantage that the voltage drops over the diodes entail that the charging voltage of the batteries will be too low. Moreover, there is no individual treatment of the batteries, which may cause overcharging and/or an erroneous charging. According to a further solution, separating relays are used. In this solution, the charging is initiated of the "weakest" battery, i.e. the battery having the lowest voltage, and when the batteries have obtained the same voltage level, all batteries are interconnected and charged simultaneously. These separating relays are mechanical and there is no individual treatment of the different batteries. Yet another solution is to use electronic separating means having zero voltage drop. However, these electronic separating means are very expensive.

Thus, there is a need of a battery charging device that provides an efficient and flexible separating of batteries being charged from a single source (the alternator).

### Brief description of the invention

An object of the present invention is to provide a battery charging device that is capable of isolating batteries being charged from a single source (e.g. an alternator).

A further object of the present invention is to provide a battery charging device that is capable of separating batteries being charged from a single source (an alternator) in a efficient and flexible way and that can be manufactured at a low cost.

Another object of the present invention is to provide a battery charging device that enables individual treatment of different batteries connected to the battery charging device.

These and other objects are achieved according to the present invention by providing a method and a device having the features defined in the independent claims. Preferred embodiments are defined in the dependent claims.

According to a first aspect of the invention, there is provided a battery charging device having a first input terminal connectable to a generator and being arranged to charge at least one battery. The charging device includes a first DC/DC converter arranged between the first input terminal and a first output terminal, the first DC/DC converter being adapted to increase a voltage of the battery; a first connection means coupled in parallel with the first DC/DC converter; wherein current delivered from the generator is supplied to the battery, connected to the charging device at the first output terminal, via the first connection means at a current level above a first current level and wherein current delivered from the generator is supplied to the battery via the DC/DC converter at a current level below the first current level; and a second DC/DC converter arranged between a first connection point, between the first DC/DC converter and the first connection means, and a second output terminal adapted to increase a voltage of the second battery, wherein the current delivered from the generator is supplied to the second battery via the second DC/DC converter.

According to a second aspect of the invention, there is provided a battery charging device having a first input terminal connectable to a generator and arranged to charge at least one battery. The device includes a first DC/DC converter arranged between the first input terminal and a first output terminal; a first connection means coupled in parallel with the first DC/DC converter; and a second connection means coupled in series with the first DC/DC converter and to the first output terminal and a second output terminal.

The present invention is based on the idea of utilizing connection means, such as diodes or relays, for high generator currents and DC/DC converters when the battery voltage has increased and, accordingly, the current has dropped. Thereby, an efficient separation and charging of the batteries can be obtained. For example, the tendency of levelling out imbalances leading to that the least charged battery pulling down the other can be avoided. Moreover, the potential risk that a defective battery depletes the healthier one to the point where both are useless is more or less eliminated. In addition, an individual charging of the connected batteries can be obtained and an efficient charging of the battery can be obtained. The invention can also be used in a wide variety of different types of batteries, for example, lead-acid batteries NiCd batteries, LiIon batteries, or NiMH batteries. Moreover, it can handle a very broad spectrum of currents. The design of the present invention is simple and can therefore be realised in a cost effective manner.

In another embodiment of the present invention, voltage measuring means coupled between the first output terminal and a connection point between the first DC/DC converter and the first connection means adapted to measure a voltage of the battery connected to the first output terminal. Preferably, the measuring means is a shunt.

In still another embodiment of the present invention, the battery charging device further comprises control means arranged for communicating with the measuring means via a communication bus, the control means being adapted to control functions of the measuring means. Thus, the charging procedure of the battery or batteries can be controlled in an effective way.

According to a further embodiment of the present invention, the control means is arranged to communicate with the first and/or second DC/DC converter via the communication bus, the control means being adapted to control function of the first and/or second DC/DC converter. Thereby, the charging procedure of the battery or batteries can be controlled in an even more effective way.

In one embodiment, the control means comprises means for obtaining voltage information of the battery(-ies) and/or the current delivered to the battery(-ies) for measuring and detecting voltage / current via the shunt. The control means may also be capable of obtaining temperature information from the batteries via temperature sensors.

Furthermore, the control means may be arranged to bring the shunt to act or respond to control commands based upon the obtained information and memory means (not shown). The memory means may comprise a non-volatile memory chip (e.g. an EEPROM or FLASH memory chip) which is capable of storing data. Accordingly, it is, for example, possible to control functions of the measuring means and a battery charger connected to the battery charging device.

A user is capable of adjusting the operation of the battery charging device by means of the control means, for example, by inputting data regarding the system configuration or the battery/batteries to be charged. In addition, the user is capable of viewing conditional information obtained by the control means from the battery charging device, for example, temperature of a supply battery, voltage level of a supply battery, or level of current supplied to a starter battery.

Moreover, functions, such as methods for charging a battery having a high internal resistance due to sulphating during discharging of the battery and for maintenance charging of a battery, can be implemented in the control means. The details of the control means will not be described in further detail here, because the functions and design of its parts are well known to the man skilled in the art.

Of course, there are a number of conceivable designs of the control means, for example, the control means can be realized by means of a processor including, inter alia, programmable instructions for executing, for example, the methods of charging a battery having a high internal resistance due to sulphating during discharging of the battery and for maintenance charging of a battery.

As realized by the person skilled in the art, methods described herein, as well as preferred embodiments thereof, are suitable to realize as a computer program or a computer readable medium.

The features that characterize the invention, both as to organization and to method of operation, together with further objects and advantages thereof, will be better understood from the following description used in conjunction with the accompanying drawings. It is to be expressly understood that the drawings are for the purpose of illustration and description and is not intended as a definition of the limits of the invention. These and other objects attained, and advantages offered, by the present invention will become more fully apparent as the description that now follows is read in conjunction with the accompanying drawings.

### Brief description of the drawings

Above-mentioned and other features and advantages of the present invention will be apparent from the following detailed description of preferred embodiments, merely exemplifying, in conjunction with the attached drawing, wherein:
- Fig. 1: shows schematically current and voltage vs. time during a charging procedure of a battery using a battery charging device according to the invention;
- Fig. 2: shows schematically a first embodiment of the battery charging device according to the present invention;
- Fig. 3a: shows schematically a second embodiment of the battery charging device according to the present invention;
- Fig. 3b: shows schematically a third embodiment of the battery charging device according to the present invention;
- Fig. 3c: shows schematically a fourth embodiment of the battery charging device according to the present invention;
- Fig. 4: shows schematically a fifth embodiment of the battery charging device according to the present invention;
- Fig. 5: shows schematically a sixth embodiment of the battery charging device of the present invention; and
- Fig. 6: shows schematically a seventh embodiment of the battery charging device of the present invention; and
- Fig. 7: shows schematically a eight embodiment of the battery charging device of the present invention.

### Description of preferred embodiments

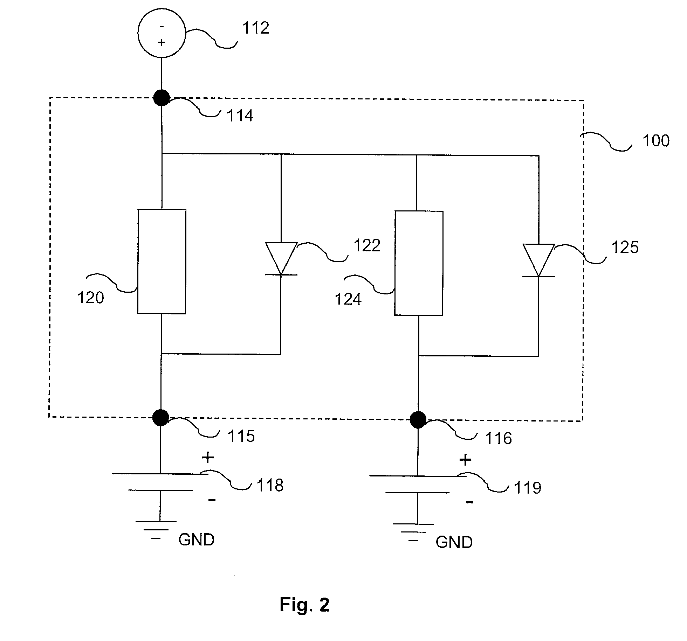

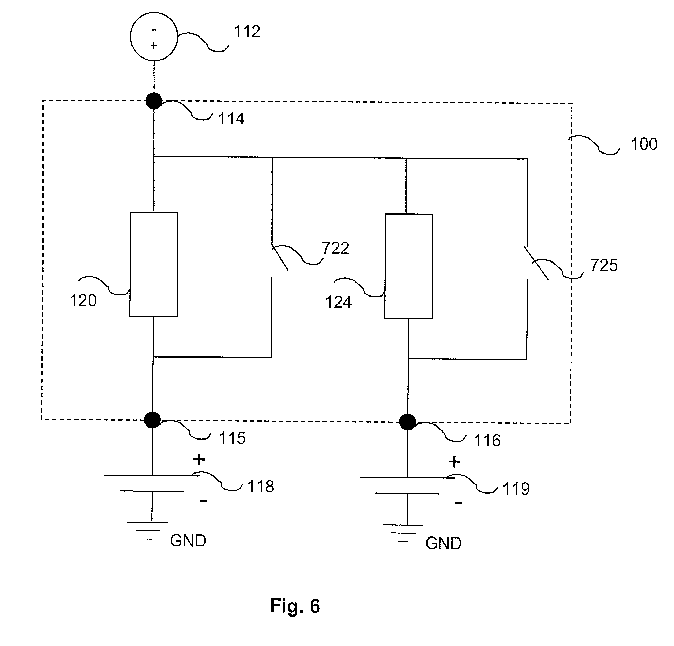

Referring first to Fig. 2, a first embodiment of the battery charging device according to the present invention will be described. The battery charging device 100 is connectable to a alternating voltage generating device 112, such as a generator, alternator or other type of charging device, at an input terminal 114. At a first output terminal 115, the system 100 is connectable to a first battery 118, and at a second output terminal 116 the system 100 is connectable to a second battery 119. For example, the first battery 118 may be a supply battery and the second battery 119 may be a starter battery. The battery charging device 100 comprises a first DC/DC converter 120 arranged between the first input terminal 114 and the first output terminal 115. In a preferred embodiment, the first DC/DC converter 120 is adapted to supply a controlled charging curve and to handle a current in the range of 1-25 A. Furthermore, a first connection means 122 is arranged in parallel with the first DC/DC converter 120. Preferably, the first connection means 122 is a diode. In an alternative embodiment, the first connection means 122 is a relay, which, however, will be discussed below with reference to Fig. 6. A second DC/DC converter 124 is arranged between the first input terminal 114 and the second output terminal 116. In a preferred embodiment, the second DC/DC converter 124 is adapted to supply a controlled charging curve and to handle a current in the range of 1-25 A. Moreover, a second connection means 125 is arranged in parallel with the second DC/DC converter 124. Preferably, the second connection means 125 is a diode. In an alternative embodiment, the second connection means 125 is a relay, which, however, will be discussed below with reference to Fig. 6.

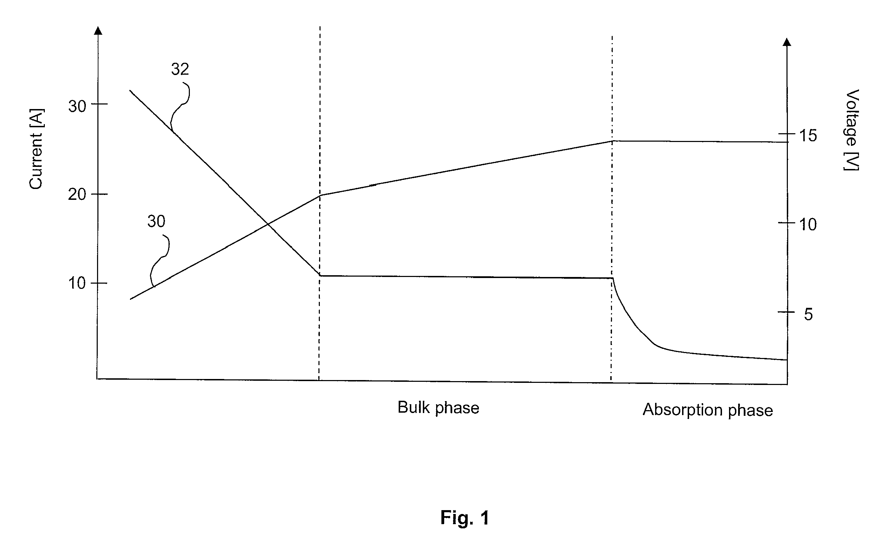

In operation, the battery charging device 100 according to the present invention functions as follows. At a low battery voltage, for example when connecting a supply battery 118 and a starter battery 119 to be charged to the charging device 100 at the first output terminal 115 and the second output terminal 116, respectively, the generator 112 is capable of supplying a high current, in the range of 50 A, via the first branch comprising the first diode 122 and the first DC/DC converter 120 and the second branch comprising the second diode 125 and the second DC/DC converter 124. At this stage, the current is supplied to the supply battery 118 via the first diode 122 and to the starter battery 119 via the second diode 125. The voltage drop over the first and second diodes 122 and 125, respectively, are about 0.5 V, and, accordingly, at high current, i.e. about 50 A, the efficiency loss or, in other words, the loss in power is about 25 W. When the voltage of the battery increases, the current supplied from the generator drops and thereby also the power loss in the diodes 122 and 125, respectively. At a battery voltage of the supply battery over a certain level, about 12.5-13 V, the current has dropped to a level the DC/DC converter 120 is capable of handling. In one embodiment, this current level is about 10 A. That is, when the current supplied to the battery 118 have dropped to about 10 A, the current is instead conducted to the battery via the DC/DC converter 120. Thereafter, the DC/DC converter 120 delivers a constant current to the moment the battery 118 is fully charged, i.e. reaches maximum voltage, which is about 14.4-14.8 V at 25 degrees Celsius. Thereafter, the DC/DC converter 120 only supplies an absorption current which is tapering off when the battery reaches 100% State of Charge (SoC). Thereafter, the first DC/DC converter 120 only supplies an absorption current, see Fig. 1. This course of events is shown in Fig. 1, where the voltage and current are shown versus time. The voltage is indicated with reference numeral 30 and current with 32. As can be seen, the current decreases substantially exponentially during this absorption phase, i.e. when the battery has reached 100% State of Charge (SoC), at a substantially constant voltage of about 14.4-14.8 V. During the so called bulk charging phase the current is substantially constant.

In the second branch, current is conducted via the second DC/DC converter 124 when the battery voltage of the starter battery 119 has reached a level of about 12.5-13 V, i.e. the current supplied to the starter battery 119 has dropped to a level the second DC/DC converter 124 is capable of handling. In one embodiment, this current level is about 10 A. That is, when the current supplied to the starter battery 119 has dropped to about 10 A, the current is instead conducted to the battery via the second DC/DC converter 124. Thereafter, the second DC/DC converter 124 delivers a constant current to the moment the battery 119 is fully charged, i.e. reaches maximum voltage, i.e. reaches maximum voltage, which is about 14.4-14.8 V at 25 degrees Celsius. Thereafter, the DC/DC converter 124 only supplies an absorption current which is tapering off when the battery reaches 100% State of Charge (SoC). Thereafter, the second DC/DC converter 124 only supplies an absorption current, see Fig. 1, as outlined above.

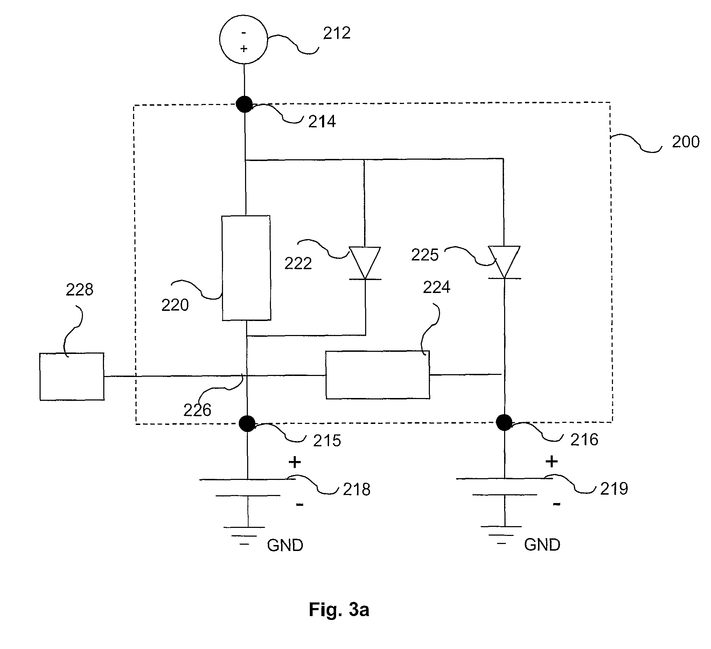

With reference now to Fig. 3a, a second embodiment of the battery charging device according to the present invention will be described. The battery charging device 200 is connectable to an alternating voltage generating device 212, such as a generator, alternator or other type of charging device, at an input terminal 214. At a first output terminal 215, the system 200 is connectable to a first battery 218, and at a second output terminal 216 the system 200 is connectable to a second battery 219. For example, the first battery 218 may be a supply battery and the second battery 219 may be a starter battery. The battery charging device 200 comprises a first DC/DC converter 220 arranged between the first input terminal 214 and the first output terminal 215. In a preferred embodiment, the first DC/DC converter 220 is adapted to supply a controlled charging curve and to handle a current in the range of 1-25 A. Furthermore, a first connection means 222 is arranged in parallel with the first DC/DC converter 220. Preferably, the first connection means 222 is a diode. In an alternative embodiment, the first connection means 222 is a relay.

A second DC/DC converter 224 is arranged between the connection point 226 of the first DC/DC converter 220 and the first diode 222. In a preferred embodiment, the second DC/DC converter 224 is adapted to supply a controlled charging curve and to handle a current in the range of 1-25 A. Moreover, a second connection means 225 is arranged between the first input terminal 214 and a connection point between the second DC/DC converter 224 and the second output terminal 216. Preferably, the second connection means 225 is a diode. In an alternative embodiment, the second connection means 225 is a relay.

Furthermore, a battery charger 228 of conventional type, including, for example, chargers with solar cells, may be connected to the connection point 226 of the first DC/DC converter 220 and the first diode 222, which charger 228 is connected to mains.

In operation, the battery charging device 200 according to the present invention functions as follows. At a low battery voltage, for example when connecting a supply battery 218 and a starter battery 219 to be charged to the charging device 200 at the first output terminal 215 and the second output terminal 216, respectively, the generator 212 is capable of supplying a high current, in the range of 50 A, via the first branch comprising the first diode 222 and the first DC/DC converter 220 and the second branch comprising the second diode 225. At this stage, the current is supplied to the supply battery 218 via the first diode 222 and to the starter battery 219 via the second diode 225. The voltage drop over the first and second diodes 222 and 225, respectively, are about 0.5 V, and, accordingly, at high current, i.e. about 50 A, the efficiency loss or, in other words, the loss in power is about 25 W. When the voltage of the battery increases, the current supplied from the generator drops and thereby also the power loss in the diodes 222 and 225, respectively. At a battery voltage of the supply battery over a certain level, about 12.5-13 V, the current has dropped to a level the first DC/DC converter 220 is capable of handling. In one embodiment, this current level is about 10 A. That is, when the current supplied to the battery 218 has dropped to about 10 A, the current is instead conducted to the battery via the first DC/DC converter 220. Thereafter, the DC/DC converter 220 delivers a constant current to the moment the battery 218 is fully charged, i.e. reaches maximum voltage, which is about 14.4-14.8 V at 25 degrees Celsius. Thereafter, the DC/DC converter 220 only supplies an absorption current which is tapering off when the battery reaches 100% State of Charge (SoC), see Fig. 1, where the voltage and current are shown versus time. The voltage is indicated with reference numeral 30 and current with 32. As can be seen, the current decreases substantially exponentially during this absorption phase, i.e. when the battery has reached 100% State of Charge (SoC), at a voltage of about 14.4-14.8 V. During the so called bulk charging phase the current is substantially constant.

Furthermore, current is conducted via the second DC/DC converter 224 to the starter battery 219, and the second DC/DC converter 224 delivers a constant current to the moment the battery 219 is fully charged, i.e. reaches maximum voltage, i.e. reaches maximum voltage, which is about 14.4-14.8 V at 25 degrees Celsius. Thereafter, the DC/DC converter 224 only supplies an absorption current which is tapering off when the battery reaches 100% State of Charge (SoC), see Fig. 1, where the voltage and current are shown versus time. The voltage is indicated with reference numeral 30 and current with 32. As can be seen, the current decreases substantially exponentially during this absorption phase, i.e. when the battery has reached 100% State of Charge (SoC), at a voltage of about 14.4-14.8 V. During the so called bulk charging phase the current is substantially constant.

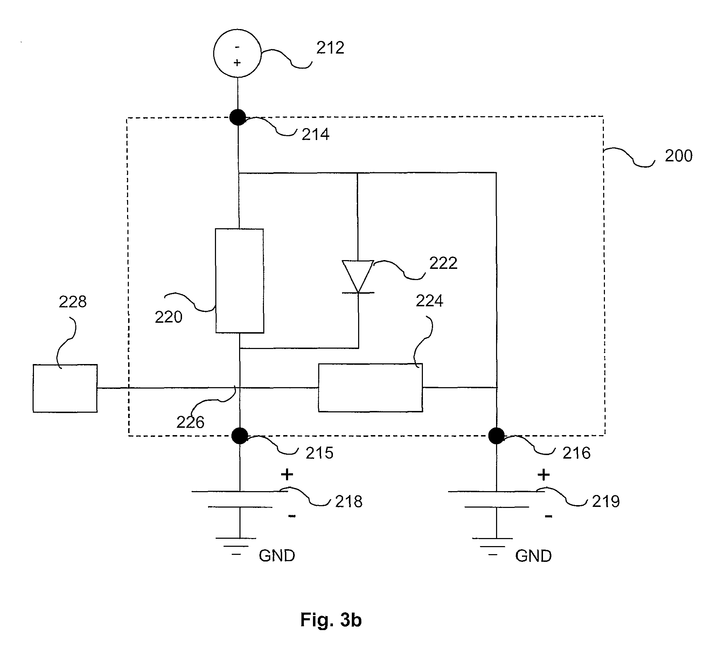

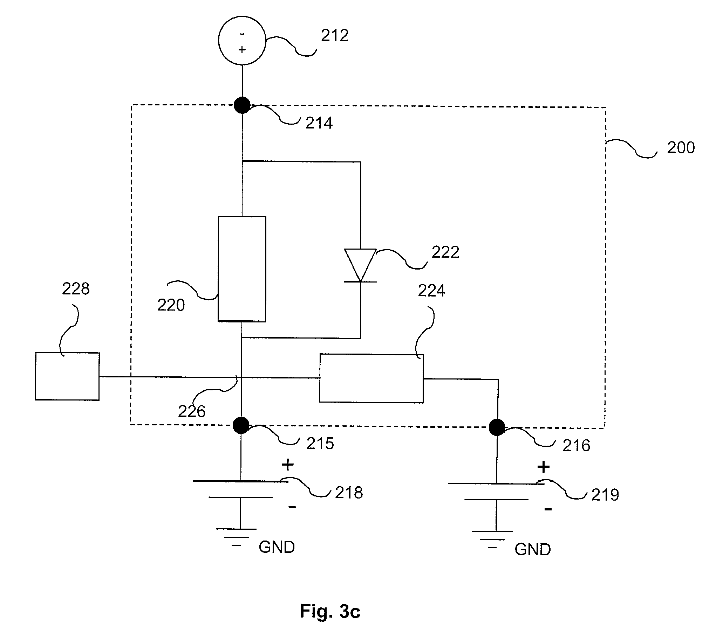

In Figs. 3b and 3c, third and fourth embodiments are shown, respectively. The designs of the third and fourth embodiments are similar to the third embodiment shown in Fig. 3a with the exception that the second diode 225 has been removed. In the third embodiment, the input terminal 214 has a direct connection with the second output terminal 216 and in the fourth embodiment the connection between the input terminal 214 and the second output terminal 216 is open. The third embodiment shown in fig. 3b may also include control logic adapted to synchronize the operation of the first DC/DC converter 220 and the second DC/DC converter 224.

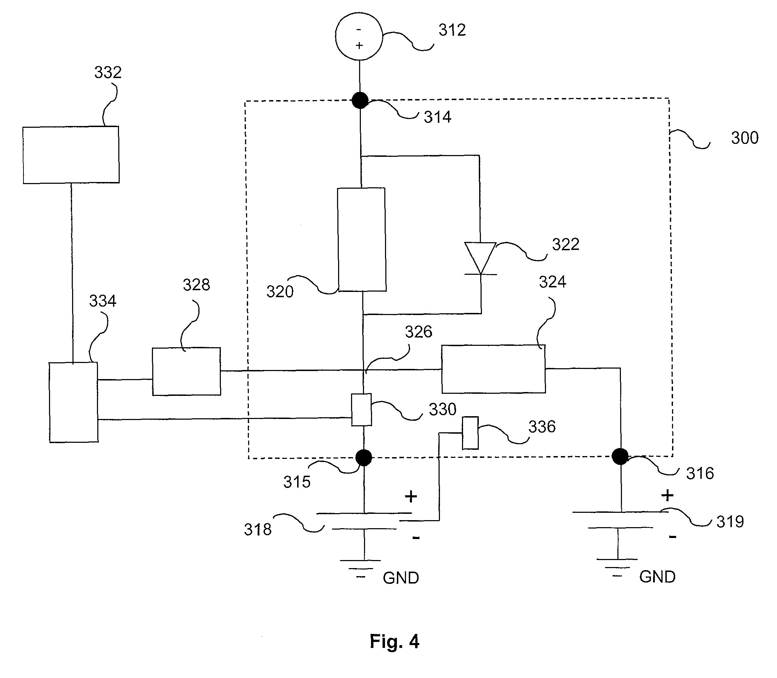

Turning now to Fig. 4, a fifth embodiment of the battery charging device according to the present invention will be described. The battery charging device 300 is connectable to an alternating voltage generating device 312, such as a generator, alternator or other type of charging device, at an input terminal 314. At a first output terminal 315, the system 300 is connectable to a first battery 318, and at a second output terminal 316 the system 300 is connectable to a second battery 319. For example, the first battery 318 may be a supply battery and the second battery 319 may be a starter battery. The battery charging device 300 comprises a first DC/DC converter 320 arranged between the first input terminal 314 and the first output terminal 315. In a preferred embodiment, the first DC/DC converter 320 is adapted to supply a controlled charging curve and to handle a current in the range of 1-25 A. Furthermore, a first connection means 322 is arranged in parallel with the first DC/DC converter 320. Preferably, the first connection means 322 is a diode. In an alternative embodiment, the first connection means 322 is a relay.

A second DC/DC converter 324 is arranged between the connection point 326 of the first DC/DC converter 320 and the first diode 322. In a preferred embodiment, the second DC/DC converter 324 is adapted to supply a controlled charging curve and to handle a current in the range of 1-25 A.

A battery charger 328 of conventional type is connected to the connection point 326 of the first DC/DC converter 320 and the first diode 322, which charger 328 is connected to mains. Furthermore, voltage measuring means 330 is arranged between the connection point 316 and the first output terminal 315, which measuring means is adapted to measure the voltage of the battery 318. In one embodiment, the measuring means 330 is a shunt. A temperature sensor 336 may be arranged to measure the temperature of the first battery 318, and a similar sensor (not shown) can be arranged to measure the temperature of the second battery 319.

A control means 332 is connected to the measuring means 330 and the battery charger 328 via a communication bus 334. In addition, the control means may be connected to the first DC/DC converter 320 and the second DC/DC converter 324. Optionally, the control means 332 comprises means for obtaining voltage information of the battery(-ies) 318 and/or 319 and/or the current delivered to the battery(-ies) connected to the battery charging device 300 for measuring and detecting of voltage / current via the shunt 330. Temperature sensors arranged in the charger 300 may be connected to the control means 332 and, thereby, the control means 332 is capable of obtaining temperature information from the first and/or second battery 318 and 319.

Furthermore, the control means 332 is arranged for bringing the shunt 330 and/or the battery charger 328 to act or respond to control commands based upon the obtained information and memory means (not shown). The memory means may comprise a non-volatile memory chip (e.g. an EEPROM or FLASH memory chip) which is capable of storing data. The memory means may contain computer programs adapted to cause the control means 332 to execute control function, for example, by means of the shunt 330. Accordingly, it is, for example, possible to control functions of the measuring means 330 and the battery charger 328 by means of the control means 332. For example, it is possible to measure supplied battery energy and consumed battery energy and, thus it is possible to control the charger to supply energy to the battery/batteries when energy is available, for example from the generator.

A user is capable of adjusting the operation of the battery charging device 300 by means of the control means 332, for example, battery type and size of battery. In addition, the user is capable of viewing conditional information obtained by the control means 332 from the battery charging device 300, for example, temperature of the supply battery 318, voltage level of the supply battery, or level of energy supplied to the starter battery 319.

Moreover, functions, such as methods for charging a battery having a high internal resistance due to sulphating during discharging of the battery and for maintenance charging of a battery, can be implemented in the control means 332. The details of the control means will not be described in further detail here, because the functions and design of its parts are well known to the person skilled in the art.

Of course, there are a number of conceivable designs of the control means, for example, the control means can be realized by means of a processor including, inter alia, programmable instructions for executing the methods charging a battery having a high internal resistance due to sulphating during discharging of the battery and for maintenance charging of a battery.

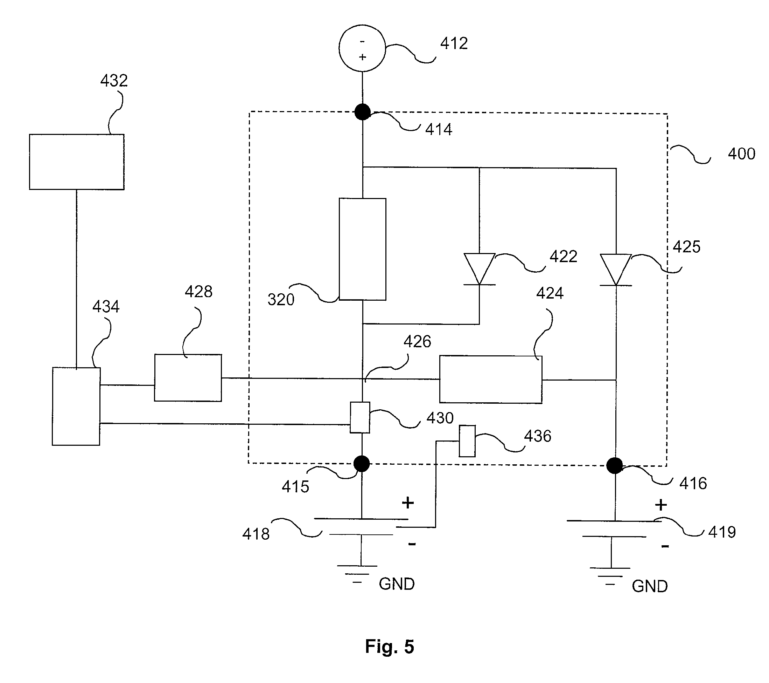

Referring to Fig. 5, a sixth embodiment of the present invention will be described. The battery charging device 400 is connectable to a alternating voltage generating device 412, such as a generator, alternator or other type of charging device, at an input terminal 414. At a first output terminal 415, the system 400 is connectable to a first battery 318, and at a second output terminal 416 the system 400 is connectable to a second battery 419. For example, the first battery 418 may be a supply battery and the second battery 419 may be a starter battery. The battery charging device 400 comprises a first DC/DC converter 420 arranged between the first input terminal 414 and the first output terminal 415. In a preferred embodiment, the first DC/DC converter 420 is adapted to supply a controlled charging curve and to handle a current in the range of 1-25 A. Furthermore, a first connection means 422 is arranged in parallel with the first DC/DC converter 420. Preferably, the first connection means 422 is a diode. In an alternative embodiment, the first connection means 422 is a relay.

A second DC/DC converter 424 is arranged between the connection point 426 of the first DC/DC converter 420 and the first diode 422. In a preferred embodiment, the second DC/DC converter 424 is adapted to supply a controlled charging curve and to handle a current in the range of 1-25 A. Moreover, a second connection means 425 is arranged between the first input terminal 414 and a connection point between the second DC/DC converter 424 and the second output terminal 416. Preferably, the second connection means 425 is a diode. In an alternative embodiment, the second connection means 425 is a relay.

A battery charger 428 of conventional type is connected to the connection point 426 of the first DC/DC converter 420 and the first diode 422, which charger 428 is connected to mains. Furthermore, voltage measuring means 430 is arranged between the connection point 416 and the first output terminal 415, which measuring means is adapted to measure the voltage of the battery 418. In one embodiment, the measuring means 430 is a shunt. A temperature sensor 436 may be arranged to measure the temperature of the first battery 418, and a similar sensor (not shown) can be arranged to measure the temperature of the second battery 419.

A control means 432 is connected to the measuring means 430 and the battery charger 428 via a communication bus 434. In addition, the control means 432 may be connected to the first DC/DC converter 420 and the second DC/DC converter 424. Optionally, the control means 432 comprises means for obtaining voltage information of the battery(-ies) 418 and/or 419 and/or the current delivered to the battery(-ies) connected to the battery charging device 400 for measuring and detecting voltage / current via the shunt 430. Temperature sensors arranged in the charger 400 may be connected to the control means 432 and, thereby, the control means 432 is capable of obtaining temperature information from the first and/or second battery 418 and 419.

Furthermore, the control means 432 is arranged for bringing the shunt 430 and/or the battery charger 428 to act or respond to control commands based upon the obtained information and memory means (not shown). The memory means may comprise a non-volatile memory chip (e.g. an EEPROM or FLASH memory chip) which is capable of storing data. Accordingly, it is, for example, possible to control functions of the measuring means 430 and the battery charger 428 by means of the control means 432. For example, it is possible to measure supplied battery energy and consumed battery energy and, thus it is possible to control the charger to supply energy to the battery/batteries when energy is available, for example from the generator.

A user is capable of adjusting the operation of the battery charging device 400 by means of the control means 432, for example, battery type, battery size, etc. In addition, the user is capable of viewing conditional information obtained by the control means 432 from the battery charging device 400, for example, temperature of the supply battery 418, voltage level of the supply battery, or level of current supplied to the starter battery 419.

Moreover, functions, such as methods for charging a battery having a high internal resistance due to sulphating during discharging of the battery and for maintenance charging of a battery, can be implemented in the control means 432. The details of the control means will not be described in further detail here, because the functions and design of its parts are well known to the man skilled in the art.

Of course, there are a number of conceivable designs of the control means, for example, the control means can be realized by means of a processor including, inter alia, programmable instructions for executing, for example, the methods charging a battery having a high internal resistance due to sulphating during discharging of the battery and for maintenance charging of a battery.

A seventh embodiment is shown in Fig. 6, where like parts in Fig. 2 and Fig. 6 are denoted with the same reference numerals. A first relay means 722 is coupled in parallel with the first DC/DC converter 120 and a second relay means 725 is coupled in parallel with the second DC/DC converter 124. In operation, the charger device according to this seventh embodiment of a battery charging device functions, in principle, the same manner as the battery charging device shown in Fig. 2 and described above.

The relay means 622, 722, and 725 can be controlled by means of a control means of the type discussed above.

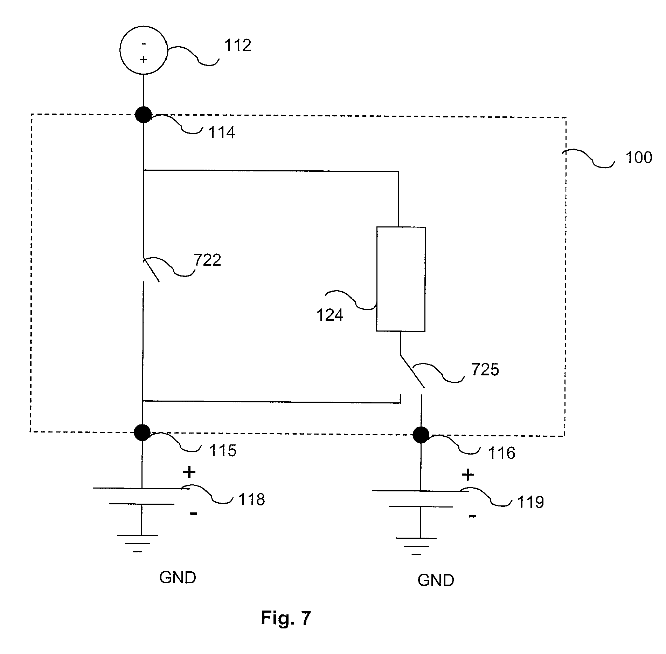

With reference to Fig. 7, an eight embodiment of the present invention will be discussed, where like parts in Fig. 2 and Fig. 7 are denoted with the same reference numerals. The charger device 500 includes a first relay 722 is coupled in parallel with the first DC/DC converter 124 and a second relay 725 is coupled in series with the first DC/DC converter and to the first output terminal 115 and a second output terminal 116. The relay 725 is closed when the generator is activated and the first DC/DC converter charges the second battery 119 via the second relay 725. When the charging of the second battery 119 is about to be completed and the generator is on, the first relay 722 is open and the DC/DC converter 124 charges the first battery 118 via the second relay 725. When the generator is off and the second battery 119 is has not reached 100 % State of Charge, the first relay 722 is open and the DC/DC converter charges the second battery via the second relay 725. The energy is supplied from the first battery.

Although specific embodiments have been shown and described herein for purposes of illustration and exemplification, it is understood by those of ordinary skill in the art that the specific embodiments shown and described may be substituted for a wide variety of alternative and/or equivalent implementations without departing from the scope of the invention. Those of ordinary skill in the art will readily appreciate that the present invention could be implemented in a wide variety of embodiments, including hardware and software implementations, or combinations thereof. As an example, many of the functions described above may be obtained and carried out by suitable software comprised in a micro-chip or the like data carrier. This application is intended to cover any adaptations or variations of the preferred embodiments discussed herein. Consequently, the present invention is defined by the wording of the appended claims and equivalents thereof.

## Claims

1. A battery charging device (200; 300; 400) having a first input terminal (214; 314; 414) connectable to a generator (212; 312; 412) and being arranged to charge at least one battery (218, 219; 318, 319; 418, 419, **characterized by**:
a first DC/DC converter (220; 320; 420) arranged between said first input terminal (214; 314; 414) and a first output terminal (215; 315; 415), said first DC/DC converter (220; 320; 420) being adapted to increase a voltage of a first battery (218; 318; 418);
a first connection means (222; 322; 422) coupled in parallel with said first DC/DC converter;
wherein current delivered from said generator (212; 312; 412) is supplied to said first battery (218; 318; 418), connected to the charging device at said first output terminal (215; 315; 415), via said first connection means (222; 322; 422) at a current level above a first current level and wherein current delivered from said generator (212; 312; 412) is supplied to said first battery (218; 318; 418) via said DC/DC converter (220; 320; 420) at a current level below said first current level; and
a second DC/DC converter (224; 324; 424) arranged between a first connection point (226; 326; 426), between said first DC/DC converter (220; 320; 420) and said first connection means (222; 322; 422), and a second output terminal (216; 316; 416) adapted to increase a voltage of a second battery (219; 319; 419), wherein the current delivered from said generator (212; 312; 412) is supplied to said second battery (219; 319; 419) via said second DC/DC converter (224; 324; 424).

2. The battery charging device according to claim 1, further comprising
a second connection means (225; 425) coupled between said second output terminal (216; 416) and said first input terminal (214; 414).

3. The battery charging device according to any one of preceding claims 1 or 2, further comprising
voltage measuring means (330; 430) coupled between said first output terminal (314; 414) and said first connection point (326; 426), between said first DC/DC converter (320; 420) and said first connection means (322; 422), adapted to measure a voltage of the battery (318; 418) connected to said first output terminal (315; 415).

4. The battery charging device according to claim 3, wherein said measuring means (330; 430) is a shunt.

5. The battery charging device according to claim 3 or 4, further comprising
control means (332; 432) arranged for communicating with said measuring means (330; 430) via a communication bus (334; 434), said control means (332; 432) being adapted to control functions of said measuring means (330; 430).

6. The battery charging device according to claim 5, wherein said control means (332; 432) is arranged to communicate with said first and/or second DC/DC converter (320, 324; 420; 424) via said communication bus (334; 434), said control means (332; 432) being adapted to control function of said first and/or second DC/DC converter (320, 324; 420; 424).

7. The battery charging device according to any one of preceding claims, wherein said first connection means is a diode (222; 322; 422).

8. The battery charging device according to any one of preceding claims, wherein said second connections means is a diode (225; 425).

9. The battery charging device according to any one of preceding claims, wherein said first connection means and second connections means, respectively, is a first relay means (622; 722) and a second relay means (725), respectively.

10. A battery charging device (100) having a first input terminal (114) connectable to a generator (112) and arranged to charge at least one battery (118, 119), **cha racterized by:**
a first DC/DC converter (124) arranged between said first input terminal (114) and a first output terminal (115);
a first connection means (722) coupled in parallel with said first DC/DC converter (124); and
a second connection means (825) coupled in series with said first DC/DC converter (124) and to said first output terminal and a second output terminal (116).
